# EUROPEAN PATENT SPECIFICATION

(11) **EP 1 937 094 B1**
(45) Date of publication and mention of the grant of the patent: **13.01.2010**
(21) Application number: 06765228.9
(22) Date of filing: 07.08.2006
(51) Int. Cl.: A41D 13/12

(54) **MEDICAL TREATMENT GARMENT**
KLEIDUNG ZUR MEDIZINISCHEN BEHANDLUNG
VETEMENT POUR TRAITEMENT MEDICAL

(30) Priority: 13.08.2005 GB 0516663
(43) Date of publication of application: 02.07.2008
(73) Proprietor: Medlock Medical Limited, Oldham OL1 3HS (GB)
(72) Inventor: LEEMING, Ray, Oldham OL2 7AR (GB)
(74) Representative: Middlemist, Ian Alastair
(86) International application number: PCT/GB2006/002925
(87) International publication number: WO 2007/020380

(56) References cited:
- DE-C1- 19 513 887
- FR-A1- 2 570 935
- US-A1- 2003 079 268
- US-A1- 2003 131 635
- US-A1- 2003 230 120
- US-A1- 2004 194 266
- US-B1- 6 854 296

## Description

This invention relates to a medical treatment garment, in particular to an improved wet wrapping garment for use, for example, in the treatment of atopic eczema, or other skin disorders.

In the treatment of skin disorders, especially atopic eczema, the wet wrapping technique involves the patient (usually, but not exclusively a child) wearing an inner water-soaked or dampened garment. The garment lessens the effects of persistent scratching, protects emollients applied to the skin from being rubbed off, and following water impregnation, cools the skin surface and thereby reduces inflammation and irritation, reducing scratching and promoting sound rest.

The inner and outer garments are made of the same material, usually viscose or bleached cotton, and it is often found that the water is not retained by the inner garment, but instead wicks through the outer garment. This causes dampening of over-clothing and/or bedding, to the discomfort, and possible embarrassment, of the patient. More importantly reducing the water content of the inner garment reduces the effectiveness of the treatment.

US 2004/0194266 discloses a garment for treatment of bums and other skin conditions, comprising a fluid impervious layer and an overlying fluid dispensing layer for dispensing treatment fluid. The overlying layer is made to be retentive of fluid, which is dispensed in response to pressure and/or body temperature. An all-over garment is illustrated. The fluid dispensing layer contacts the skin and the fluid impervious layer prevents leakage to overlying clothing. The layers are connected at connection points but it is not disclosed how this is achieved.

US 6854296 discloses a knitted fabric of two superposed webs, which are connected by tuck stitches each comprising a yarn of one web engaging in the other web. The inner ply comprises hydrophilic yarns such as cotton, while the outer ply is of hydrophobic yarns such as polyester or nylon. The inner ply acts to wick moisture away from the body, while the outer ply provides a water-repellent exterior

The present invention seeks to provide a medical treatment garment especially for use as a wet wrapping garment for treatment of skin disorders such as atopic eczema, which serves to substantially prevent or delay the escape of water from the inner layer of the garment and helping to maintain a moist environment.

According to the present invention there is provided a garment as defined in claim 1. Tests have proven that the garments of the invention significantly slow down the evaporation of water from the inner garment layer, when compared to the inner garment of the twin garment arrangements of the prior art.

The one-piece, twin layer, garments of the invention can be made to be lighter than the double garment application of the prior art, depending on the type(s) of fibres used and the level of garment durability required. The garments of the invention are also more cost-effective to produce and easier to put on and remove, being one garment and not two.

The inner layer and outer layer are preferably interconnected over the smallest possible area so as to reduce potential wicking from the inner to the outer layer. It has been found that laminates bonded over their entire area would not be suitable without an expensive intermediate waterproof layer. Ideally the area over which the two layers are permanently interconnected is less than 5%, and ideally less than 1%, of the area of the outer layer. The two layers are thus separate, resulting in slowing down the moisture evaporation level from the high absorbency inner layer.

Preferably the first material has a water absorption expressed as Regain (%) at 65% RH and 20°C of up to 12 and the similarly measured water absorption for the second material is less than 1 (based on data by J.E.Ford in Physical Properties of Textile Fibres by W.E.Morton and J.W.S.Hearle)

The tubular fabric may be formed by continuously knitting a continuous tube consisting of a zone of first material connected by a knitted seam to a zone of a second material. One zone is folded about the seam, leaving an inner zone of said first material and an outer zone of said second material.

The first material may comprise yarns containing a high proportion of water retentive fibres, such as natural and or regenerated fibres, for example viscose and/or cotton which are water absorbent, and/or highly fibrillated fibres which retain water by capillary attraction, and may be loosely knit.

The second material may comprise generally water-repellant synthetic fibres or filaments, such as polyester and/or polyamide, for example NYLON (trade mark). Ideally these are provided in a tight knit with small loops which give such low porosity values. The use of synthetic fibre for the second layer further makes the garment more durable.

The second zones comprising the second material may additionally be provided with a waterproofing coating.

The inner layer may comprise antibacterial yarns.

One layer may be coloured, patterned or carry a picture, writing and/or logo so as to easily distinguish the outer layer from the inner layer.

As stated previously, a length of fabric comprising a first zone and a second zone, is folded about the junction between the zones so that the first zone forms an internal layer and the second zone forms an external layer of a double layered fabric. The lengths may then be made up into garments, with relatively large diameter lengths of fabric tube being used to form the body or torso parts of garments, and smaller diameter tubes used for legs or arms of the garment. Apertures are included, where required for body parts. Sewn seams connect the sleeves to the body on the vest and down the inside of the pant leggings. These essential attachments and closure points are preferably the only areas where the inner and outer layers permanently connect.

The garments formed are double layer stretchable garments adapted to fit a range of sizes due to being of stretchable, preferably knitted, fabric and are suitable for use in wet wrap treatment methods for eczema and the like skin disorders.

The outer layer may be fashioned to provide "air holes" for evaporation of excess moisture.

The tubular fabric may be knitted by double-skin knitting (two layers being knitted concurrently one within the other, and jointed at the beginning or end of the tube) on a circular knitting machine using different yarns for the inner and outer layers. The yarn for the inner layer (first material) may be a high moisture absorbency yarn such as cotton or viscose rayon, whilst that for the outer layer may be a low absorbency synthetic yarn such as polyester. Alternatively the fabric may be made on a warp or flat bed knitting machine. As a further alternative the layers of the garment may be woven. In another alternative, a partially or completely seamless garment may be produced using a single or double v-bed flat knitting machine.

The garments may be made up into the form for example of vests or T-shirts and trousers, which may be sleeved or sleeveless, and with varied leg length or sleeve length depending on the affected areas of the body and/or limbs.

In order that the present invention may be more readily understood a specific embodiment thereof will now be described by way of example only with reference to the accompanying drawing in which:-
Figure 1 is a general view of a medical treatment garment according to the invention; and
Figure 2 is a diagrammatic fragmentary cross-section of part of the garment.

A garment 10 according to the invention comprises a top garment for wear over the upper torso and arms of a patient, and comprises a trunk part 11, and arms 12. The arms 12 are attached to the trunk part 11 by seams 13, and the shoulders of the trunk part 11 are formed by a partial seam 14 which leaves a neck aperture 15. The trunk part 11 is made up from a length of tubular knit fabric, of a larger diameter and the arms 12 are made up from lengths of smaller diameter knit fabric.

It is envisaged that similar trousers, comprising a lower trunk part and legs made up from pieces of tubular knit fabric would be provided separately or as part of a garment set.

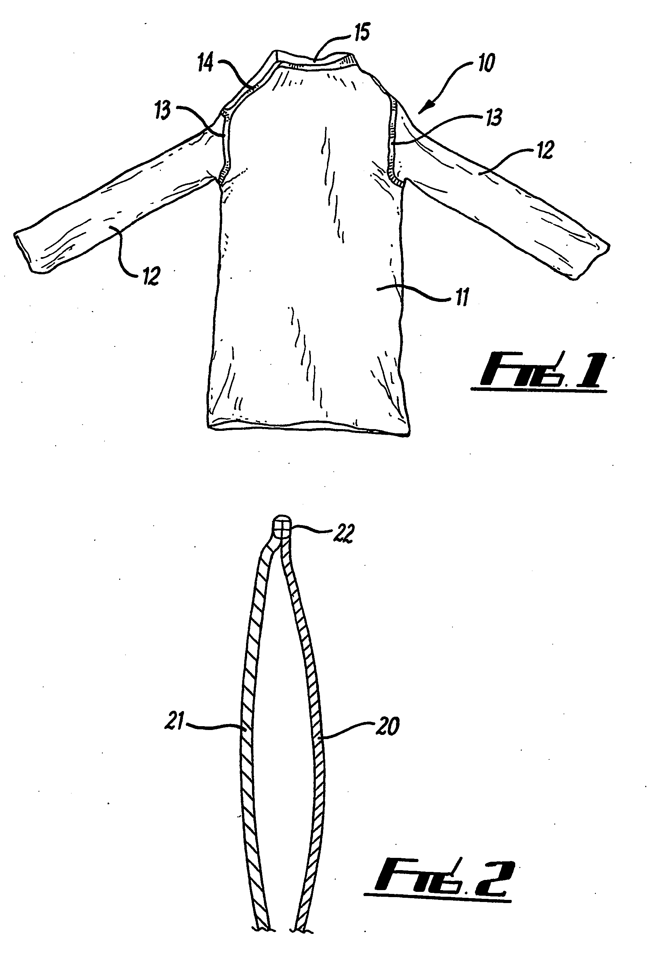

In accordance with the invention, the tubular fabric pieces forming the trunk part and the arm parts are each formed as a double layered knitted fabric, i.e. comprising an inner fabric 20 and an outer fabric 21, as shown in Figure 2.

The fabrics are knitted as one, joined at a knitted seam 22. One fabric is then folded within the other to form a double tube, from different yarn stocks. The inner fabric 20 is knitted from a yarn having a relatively high water retention capability such as cotton or viscose rayon, whilst the outer fabric 21 is knitted from a yarn which is less absorbent, such as a polyester or polyamide yarns

The knitted fabric tubes, having an inner high water absorbency and an outer low water permeability layer, are produced, which are then made up into garments.

The garment is used by first treating the patient's skin with emollient cream or lotion, then soaking the garment with water, and dressing the patient in the garment with the inner layer 20 against the skin, and the outer layer 21 exposed.

Because of the high absorbency of the inner fabric layer, and the low permeability of the outer fabric layer, water is retained against the patient's skin for longer then by known wet treatment garments, and wetting of bedding or outer clothing is reduced. This helps keep the skin cool, and thus reduces irritation and thus scratching, so that the complications which can be caused thereby are reduced in occurrence and severity. Air holes may be provided in the outer layer to allow evaporation of excess moisture.

The garment may be made on a warp or flat bed knitting machine or a single or double v-bed flat knitting machine.

The above described embodiment is by way of illustration only. Many modifications and variations are possible. Variations may be made to the medical garment, to the fabric structure thereof, particularly on the type of knit and the choice of yarns, and the design of the garments themselves may be varied as appropriate to such different wearers, or cover specific affected parts of the body or limbs.

## Claims

1. A medical treatment garment comprising a first inner layer (20), woven or knitted from one or more first materials, and a second, outer layer (21) woven or knitted from one or more second materials, wherein the first layer has a higher water absorbency than the second layer, **characterized in that** the garment is made up of tubular fabric pieces having an inner layer (20) and an outer layer (21), whereby the inner layer (20) and outer layer (21) of said tubular fabric pieces are knitted or woven as a single continuous tubular fabric, the two layers being connected at a fold, and folded so that the layers form a double fabric, with the inner layer (20) within the outer layer (21), the layers being connected only at the folds and if necessary at essential attachment and closure points required to make up the garments, like seams (13) to attach arms (12) or legs to a trunk part (11).

2. A medical treatment garment according to claim 1, **characterised in that** the inner and outer layers (20,21) are knitted as complete seamless garments which are connected only at the fold with the inner layer (20) within the outer layer (21) to form a double garment layer.

3. A medical treatment garment according to claim 1, **characterised in that** the inner and outer layers (20,21) are connected by a seam (22) at the fold, and folded with the inner layer (20) within the outer layer (21) to form a double garment layer.

4. A garment according to any preceding claim wherein said first material has a water absorbtion (% Regain at 65% RH and 20°C) up to 12, and the similarly measured water absorbtion of the second material is less than 1.

5. A garment according to any preceding claim wherein the first material comprises yarns containing a high proportion of water retentive fibres.

6. A garment according to claim 5 wherein said water retentive fibres comprise natural or regenerated fibres or highly fibrillated fibres.

7. A garment according to any preceding claim, wherein the second material comprises generally water repellant synthetic fibres or filaments.

8. A garment according to claim 7 wherein the water-repellant fibres or filaments comprise polyester and/or polyamide fibres or filaments.

9. A garment according to claim 8 wherein the second material is knitted in a tight knit with small loops.

10. A garment according to any preceding claim, wherein the second material is provided with a waterproofing coating.

11. A garment according to any preceding claim wherein the first material comprises antibacterial yarns.

12. A garment according to any preceding claim made from a tubular fabric knitted by double-skin knitting on a circular knitting machine using different yarns for the inner and outer layers.

13. A garment according to any preceding claim wherein the outer layer is fashioned to allow air holes for evaporation of excess moisture.

14. Use of a warp or flat bed knitting machine to make a garment according to any of claims 1 to 11.

15. A garment according to claim 1 wherein the layers of the garment are woven.

16. A garment according to any preceding claim made up into vests or t-shirts and trousers.

17. Use of a single or double v-bed flat knitting machine to produce a partially or completely seamless garment according to claims 1-11.

## Patentansprüche

1. Kleidung zur medizinischen Behandlung, mit einer ersten Innenschicht (20), die aus einem oder mehreren ersten Materialien gewebt oder gestrickt ist, und einer zweiten Außenschicht (21), die aus einem oder mehreren zweiten Materialien gewebt oder gestrickt ist, wobei die erste Schicht ein größeres Wasserabsorptionsvermögen als die zweite Schicht aufweist,
**dadurch gekennzeichnet,**
**dass** die Kleidung aus Schlauchwarenstücken mit einer Innenschicht (20) und einer Außenschicht (21) zusammengesetzt ist, wodurch die Innenschicht (20) und die Außenschicht (21) der Schlauchwarenstücke aus einer einzelnen fortlaufenden Schlauchware gestrickt oder gewebt sind, wobei die zwei Schichten an einer Falte verbunden und so gefaltet sind, dass die Schichten mit der Innenschicht (20) innerhalb der Außenschicht (21) ein Doppelgewebe bilden, wobei die Schichten lediglich an den Falten und falls notwendig an wesentlichen Befestigungs- und Verschlusspunkten, die zum Zusammensetzen der Kleidungsstücke notwendig sind, wie Nähte zum Anbringen von Ärmeln (12) oder Hosenbeinen an ein Rumpfteil (11), verbunden sind.

2. Kleidung zur medizinischen Behandlung nach Anspruch 1,
**dadurch gekennzeichnet,**
**dass** die Innen- und Außenschichten (20, 21) als vollständig nahtlose Kleidungsstücke gestrickt sind, die lediglich an der Falte mit der Innenschicht (20) innerhalb der Außenschicht (21) verbunden sind, um eine doppelte Kleidungsschicht zu bilden.

3. Kleidung zur medizinischen Behandlung nach Anspruch 1,
**dadurch gekennzeichnet,**
**dass** die Innen- und Außenschichten (20, 21) durch eine Naht (22) an der Falte verbunden sind und mit der Innenschicht (20) innerhalb der Außenschicht (21) gefaltet sind, um eine doppelte Kleidungsschicht zu bilden.

4. Kleidung nach einem vorstehenden Anspruch,
wobei das erste Material eine Wasserabsorption (prozentuale Aufnahme bei 65% RH und 20°C) von bis zu 12 aufweist, und die ähnlich gemessene Wasserabsorption des zweiten Materials weniger als 1 beträgt.

5. Kleidung nach einem vorstehenden Anspruch,
wobei das erste Material Garne, die einen hohen Anteil an wasserzurückhaltenden Fasern enthalten, aufweist.

6. Kleidung nach Anspruch 5,
wobei die wasserzurückhaltenden Fasern natürliche oder regenerierte Fasern oder stark gespleißte Fasern aufweisen.

7. Kleidung nach einem vorstehenden Anspruch,
wobei das zweite Material im Allgemeiner, wasserabweisende synthetische Fasern oder Filamente aufweist.

8. Kleidung nach Anspruch 7,
wobei die wasserabweisenden Fasern oder Filamente Polyester- und/oder Polyamidfasern oder Filamente aufweisen.

9. Kleidung nach Anspruch 8,
wobei das zweite Material mit kleinen Schleifen eng verbunden gestrickt ist.

10. Kleidung nach einem vorstehenden Anspruch,
wobei das zweite Material mit einer wasserundurchlässigen Beschichtung versehen ist.

11. Kleidung nach einem vorstehenden Anspruch,
wobei das erste Material antibakterielle Garne aufweist.

12. Kleidung nach einem vorstehenden Anspruch,
gefertigt aus einer Schlauchware, die durch doppellagiges Stricken auf einer Rundstrickmaschine unter Verwendung verschiedener Garne für die inneren und äußeren Schichten gestrickt ist.

13. Kleidung nach einem vorstehenden Anspruch,
wobei die Außenschicht so gestaltet ist, um Luftlöcher zur Verdampfung überschüssiger Feuchtigkeit zuzulassen.

14. Verwendung einer Kettenwirkerei oder einer Flachbettstrickmaschine zum Herstellen von Kleidung nach einem der Ansprüche 1 bis 11.

15. Kleidung nach Anspruch 1,
wobei die Schichten der Kleidung gewebt sind.

16. Kleidung nach einem vorstehenden Anspruch,
gefertigt zu Hemden oder T-Shirts und Hosen.

17. Verwendung einer Einzel- oder Doppel-V-Bettflachstrickmaschine zum Herstellen einer teilweisen oder vollständig nahtlosen Kleidung nach einem der Ansprüche 1 bis 11.

## Revendications

1. Vêtement de traitement médical comprenant une première couche intérieure (20), tissée ou tricotée à partir d'un ou plusieurs premiers matériaux, et une deuxième couche extérieure (21) tissée ou tricotée à partir d'un ou plusieurs deuxièmes matériaux, dans lequel la première couche possède un pouvoir absorbant supérieur à celui de la deuxième couche, **caractérisé en ce que** le vêtement est fait de pièces de tissus tubulaires ayant une couche intérieure (20) et une couche extérieure (21), grâce à quoi la couche intérieure (20) et la couche extérieure (21) desdites pièces de tissus tubulaires sont tricotées ou tissées sous forme d'un seul tissu tubulaire continu, les deux couches étant reliées à un pli, et pliées de sorte que les couches forment un double tissu, avec la couche intérieure (20) à l'intérieur de la couche extérieure (21), les couches étant reliées uniquement au niveau des plis et si nécessaire au niveau des points de fixation et de fermeture essentielles nécessaires pour fabriquer les vêtements, comme des coutures (13) pour fixer les bras (12) ou les jambes à une partie de tronc (11).

2. Vêtement de traitement médical selon la revendication 1, **caractérisé en ce que** les couches intérieure et extérieure (20, 21) sont tricotées sous forme de vêtement complètement sans couture qui sont reliées uniquement au niveau du pli avec la couche intérieure (20) dans la couche extérieure (21) pour former une double couche de vêtement.

3. Vêtement de traitement médical selon la revendication 1, **caractérisé en ce que** les couches intérieure et extérieure (20, 21) sont reliées par une couture (22) au niveau du pli, et pliées avec la couche intérieure (20) dans la couche extérieure (21) pour former une double couche de vêtement.

4. Vêtement selon l'une quelconque des revendications précédentes, dans lequel lesdits premiers matériaux présentent une absorption d'eau (% de reprise à 65 % d'humidité relative et 20°C) jusqu'à 12, et l'absorption d'eau mesurée de manière similaire du deuxième matériau est inférieure à 1.

5. Vêtement selon l'une quelconque des revendications précédentes, dans lequel le premier matériau comprend des fils contenant une proportion élevée de fibres de rétention d'eau.

6. Vêtement selon la revendication 5, dans lequel lesdites fibres de rétention d'eau comprennent des fibres naturelles ou régénérées ou des fibres hautement fibrillées.

7. Vêtement selon l'une quelconque des revendications précédentes, dans lequel le deuxième matériau comprend de manière générale des fibres ou des filaments synthétiques hydrophobes.

8. Vêtement selon la revendication 7, dans lequel les fibres ou filaments hydrophobes comprennent des fibres ou filaments de polyester et/ou de polyamide.

9. Vêtement selon la revendication 8, dans lequel le deuxième matériau est tricoté avec un tissage serré avec de petites boucles.

10. Vêtement selon l'une quelconque des revendications précédentes, dans lequel le deuxième matériau est muni d'un revêtement imperméable.

11. Vêtement selon l'une quelconque des revendications précédentes, dans lequel le premier matériau comprend des fils antibactériens.

12. Vêtement selon l'une quelconque des revendications précédentes fait d'un tissu tubulaire tricoté par double tricotage sur une machine à tricoter circulaire utilisant différents fils pour les couches intérieure et extérieure.

13. Vêtement selon l'une quelconque des revendications précédentes, dans lequel la couche extérieure est façonnée pour permettre à des orifices d'air l'évaporation de l'humidité en excès.

14. Utilisation d'une machine à tricoter à chaîne ou à plateau pour fabriquer un vêtement selon l'une quelconque des revendications 1 à 11.

15. Vêtement selon la revendication 1, dans lequel les couches du vêtement sont tissées.

16. Vêtement selon l'une quelconque des revendications précédentes réalisé sous forme de gilets ou de tee-shirts et pantalons.

17. Utilisation d'une machine à tricoter linéaire à simple ou double plateau en V pour produire un vêtement partiellement ou complètement sans couture selon l'une quelconque des revendications 1 à 11.
